**Europäisches Patentamt**

**European Patent Office**

**Office européen des brevets**

(19)

(11) Veröffentlichungsnummer: **0 233 185**

**B1**

(12)                          **EUROPÄISCHE PATENTSCHRIFT**

(45) Veröffentlichungstag der Patentschrift:
12.10.88

(51) Int. Cl.⁴: **D 01 F 9/14**

(21) Anmeldenummer: **86900087.7**

(22) Anmeldetag: **13.11.85**

(86) Internationale Anmeldenummer:
**PCT/EP 85/00619**

(87) Internationale Veröffentlichungsnummer:
**WO 86/02952 (22.05.86 Gazette 86/11)**

(54) **VERFAHREN ZUR HERSTELLUNG VON ANISOTROPEN KOHLENSTOFFASERN.**

(30) Priorität: **15.11.84 DE 3441727**

(43) Veröffentlichungstag der Anmeldung:
**26.08.87 Patentblatt 87/35**

(45) Bekanntmachung des Hinweises auf die Patenterteilung:
**12.10.88 Patentblatt 88/41**

(84) Benannte Vertragsstaaten:
**AT DE FR GB NL**

(56) Entgegenhaltungen:
**EP-A-0 026 647**
**DE-A-2 829 288**
**GB-A-2 020 310**

(73) Patentinhaber: **Bergwerksverband GmbH, Franz-Fischer- Weg 61, D-4300 Essen 13 (DE)**

(72) Erfinder: **HEIN, Michael, Am Stadtgarten 9, D-4300 Essen 14 (DE)**
Erfinder: **ROMEY, Ingo, Sandkamp 25, D-4224 Hünxe (DE)**

EP 0 233 185 B1

## Beschreibung

Die Erfindung betrifft ein Verfahren gemäß dem Oberbegriff des Anspruchs 1.

Kohlenstoffasern mit anisotroper Struktur eignen sich wegen ihres geringen Gewichtes, ihrer chemischen Beständigkeit, ihrer hervorragenden Festigkeit sowie besonders wegen ihres hohen E-Moduls als Verstärkungskomponente in qualitativ wertvollen Verbundwerkstoffen.

Anisotrope Kohlenstoffasern werden aus Pechen unterschiedlicher Herkunft aus mesophasenhaltigen Pechschmelzen mit quasikristallinen Eigenschaften hergestellt. Diese Schmelzen können aus bis zu 100 % anisotropem Pechmaterial (Mesophase) bestehen, das durch beim Spinnvorgang auftretende Scherkräfte irreversibel orientiert wird, wodurch die hergestellte Mesophasenfaser die erreichte Strukturierung beibehält. Wegen ihres hohen Erweichungsbereiches kann diese Faser durch bekannte thermische Behandlungen zu einer anisotropen Kohlenstoffaser weiterverarbeitet werden.

Es ist bereits bekannt, ein optisch anisotropes, deformierbares Pech dadurch herzustellen, daß man ein kohlenstoffhaltiges isotropes Pech mit einem organischen Lösungsmittelsystem in einer ausreichenden Menge zur Bereitstellung einer in dem Lösungsmittel unlöslichen Fraktion (Sinterungspunkt unter etwa 350°C) behandelt und die im Lösungsmittel unlösliche Fraktion auf eine Temperatur im Bereich von etwa 230°C bis 400°C unter Umwandlung in ein Pech mit einer optisch anisotropen Phase erhitzt. Als Lösungsmittel werden Gemische mit im wesentlichen Benzol oder Toluol und Gemische aus Toluol und Heptan verwendet, wobei der Toluolanteil im Gemisch > etwa 60 Vol.-% sein soll und pro g isotropen Pech etwa 5 bis 150 ml des organischen Lösungsmittelsystems bei etwa 22 bis 30°C angewendet werden sollen (DE-A-2 829 288 A 1).

Eine Anwendung der Verfahrensbedingungen dieses bekannten Verfahrens auf beispielsweise Steinkohlenteerpech führt jedoch zu dem Ergebnis, daß die erhaltene neomesophasenbildende Fraktion als eine bei etwa 250 bis 300°C unter starkem Blähen langsam erweichende Substanz zurückbleibt. Wegen ihrer großen Viskosität ist sie nicht in eine Mesophase mit einer großflächig verlaufenden Anisotropie überführbar und somit wegen ihrer schlechten Verspinnbarkeit für die Herstellung anisotroper Kohlenstoffasern nicht geeignet. Außerdem können die dabei entstehenden Gase nicht aus der Schmelze entweichen und verbleiben als Einschlüsse in der Mesophase.

Der Erfindung liegt die Aufgabe zugrunde, die Verspinnbarkeit von Mesophasenpechen zu anisotropen Kohlenstoffasern unabhängig von Ausgangspech durch eine neue und zum Erfolg führende Arbeitsweise zu verbessern.

Diese Aufgabe wird bei einem Verfahren gemäß dem Oberbegriff des Anspruchs 1 durch seine kennzeichnenden Merkmale gelöst.

Weitere Verbesserungen und Ausgestaltungen des erfindungsgemäßen Verfahrens werden durch die Merkmale der Unteransprüche erzielt.

Die Isolierung der erfindungsgemäß hergestellten mesophasenbildenden Pechfraktion erfolgt durch Extraktion handelsüblicher isotroper Teerpeche, beispielsweise Steinkohlenteerpeche, Erdölteerpeche, chemischer Peche und natürlicher Asphalte mit einkernigen aromatischen Lösungsmitteln in einem solchen Ausmaß, daß der dabei verbleibende unlösliche Rückstand die folgenden gewünschten Löslichkeiten in den betreffenden organischen Lösungsmitteln aufweist. In Chinolin mindestens 99,5 % und in Toluol 20 - 40 % lösliche Anteile, von denen maximal 50 % in n-Hexan löslich sind. Der Anteil der in Chinolin unlöslichen Bestandteile darf 0,5 % nicht überschreiten.

Da der toluolunlösliche Anteil in Teerpechen häufig kleiner als 50 % ist, kann dieser zum Erreichen einer höheren Ausbeute vor der Extraktion durch eine schonende thermische Vorbehandlung angereichert werden. Liegt beispielsweise der Gehalt an Toluolunlöslichen in einem nicht vorbehandelten Rohpech bei 30 %, so beträgt bei einem gewünschten toluollöslichen Anteil von 25 % in der isolierten mesophasenbildenden Fraktion die Gesamtausbeute nur 40 %.

Auf diese Anreicherung kann jedoch verzichtet werden, wenn von einem Steinkohlenteerpech mit einem Anteil an toluolunlöslichen Komponenten von 40 - 50 % ausgegangen wird. Zudem kann dieser Ausbeuteverlust dadurch reduziert werden, daß erfindungsgemäß ein bestimmter Anteil des aufgearbeiteten Extraktes dem unlöslichen Rückstand zur Einstellung einer optimalen Viskosität während der Mesophasenbildung zugesetzt wird.

Anhand eines Steinkohlenteerpeches soll das erfindungsgemäße Verfahren näher beschrieben werden.

Der erwünschte hohe Anteil an in Toluol unlöslichen Komponenten im Steinkohlenteerpech ist normalerweise verbunden mit einem großen Anteil chinolinunlöslicher und unschmelzbarer Verbindungen und erfordert vor der Extraktion die Entfernung dieser Anteile.

Diese Bestandteile mit einer mittleren Korngröße von ca. 1 μm sind mineralischen Ursprungs oder stellen hoch kohlenstoffreiche Komponenten dar, die die Ausbildung einer homogenen Mesophase behindern und so die Qualität der daraus gesponnenen Fasern vermindern. Aus diesem Grund ist die Verwendbarkeit von ungereinigten Pechen mit chinolinunlöslichen Verbindungen eingeschränkt.

Die Bestimmung der Pechlöslichkeit in Toluol erfolgt so, daß 2 g Pech in 100 g Toluol 2 Stunden bei 80°C gerührt und das Gemisch anschließend kalt in einem Glasfiltertiegel mit Glasfaserpapier

(Porenweite 1 µm) filtriert wird. Der mit Toluol gewaschene Rückstand ergibt nach dem zweistündigen Trocknen bei 110°C den toluolunlöslichen Rückstand.

Das Filtrat wird nach der Abtrennung des Toluolunlöslichen zur Trockene eingedampft und erneut in 5 g Toluol gelöst. Nach Zusatz von 100 g n-Hexan wird der sich abscheidende Niederschlag - Wie schon beschrieben - abgetrennt und kann nach dem Trocknen als der in n-Hexan lösliche Anteil ausgewogen werden.

Die Bestimmung der in Chinolin unlöslichen Bestandteile erfolgt nach dem Entwurf zur DIN-Vorschrift 51 921.

Entsprechend dem Anteil der aus dem Steinkohlenteerpech abzutrennenden niedermolekularen Bestandteile werden ein Gewichtsteil Pech mit vier bis sechs Gewichtsteilen Lösungsmittel bei 80°C drei Stunden extrahiert. Der unlösliche Anteil wird abfiltriert und getrocknet. Bedingt durch die gewählten Extraktionsbedingungen enthält der erfindungsgemäß isolierte Rückstand noch einen gemäß der oben erwähnten Methode bestimmten toluollöslichen Anteil von 20 - 40 % bei einer Chinolinunlöslichkeit von 0,5 %. Bei einem C/H-Verhältnis von 1,80 - 1,95 dieser isolierten mesophasenbildenden Fraktion liegt der Flüchtigengehalt zwischen 16 und 25 %.

Die so hergestellten mesophasenbildenden Peche mit einer hohen Konzentration an in Toluol unlöslichen Komponenten sind bei Temperaturen von 340 bis 410°C in ein homogenes, für den Zweck der Kohlenstoffasernherstellung auch deformierbares Mesophasenpech überführbar, das bei einem Gehalt an in Chinolin unlöslichen Komponenten von 45 - 70 % einen lichtoptisch bestimmbaren Mesophasengehalt von 60 - 100 % enthält.

Die Zusammensetzung und somit die Eigenschaften des mesophasenbildenden Peches, insbesondere hinsichtlich einer leichteren Verspinnbarkeit zu Fäden, lassen sich gezielter beeinflussen, wenn erfindungsgemäß dem nach der Extraktion gewonnenen Rückstand als "Verdünnungsmittel" ein definierter Anteil des Extraktes, aus dem zuvor das Verwendete Lösungsmittel entfernt worden ist, wieder zugesetzt wird. Die Abtrennung des Lösungsmittels erfolgt destillativ im Waaserstrahlvakuum, wobei ein als "Verdünnungmittel" zu verwendender Rückstand mit einem Erweichungspunkt (K.S) von 40 - 60°C und einem in Toluol löslichen Anteil von 90 - 100 % und einem in n-Hexan löslichen Anteil von 40 - 50 % verbleibt. Durch Zusatz von 1 - 15 % des Extraktes zum isolierten Rückstand, läßt sich somit jeder toluollösliche Anteil in der mesophasenbildenden Pechfraktion zwischen 20 und 40 % einstellen. Dadurch wird es möglich, die Eigenschaften und die Verarbeitbarkeit des daraus entwickelten mesophasenhaltigen Peches über einen weiten Bereich zu variieren.

Während der thermischen Behandlung der erfindungsgsgemäß hergestellten mesophasenbildenden Peche kann die Bildung erster Mesophasenkeime direkt nach dem Erweichen bei Temperaturen von 300 - 330°C beobachtet werden. Bei ansteigenden Temperaturen bis zu 410°C und bei Verweilzeiten von 1 bis 5 Stunden kann ein Mesophasengehalt - bestimmt als der in Chinolin unlösliche Anteil - von bis zu 70 % bestimmt werden. Dieser unlösliche Anteil ist gleichzusetzen mit einer vollständigen optischen Anisotropie der Schmelze unter dem Polarisationsmikroskop.

Die Viskosität der erfindungsgemäß hergestellten Mesophase ist über einen weiten Temperaturbereich veränderbar. Diese Eigenschaft wirkt sich besonders auf das Verspinnen dieser Peche günstig aus, weil ein optimales Fließverhalten der Spinnschmelze gefordert wird. Ein günstiges Fließverhalten eines Peches mit bis zu 100 %-igem Mesophasengehalt kann beispielsweise durch eine bei einer Temperaturerhöhung eintretende Viskositätserniedrigung erreicht werden, ohne daß dabei wegen der erhöhten Temperatureinwirkung der Beginn einer Koksbildung eintritt.

Durch eine gezielte Änderung der Viskosität ergibt sich gleichzeitig die Möglichkeit, während der Mesophasenbildung entstandene und noch in der Schmelze enthaltene Gase zu entfernen. Es ist also möglich, innerhalb eines vom Kondensationsgrad der zunächst erzeugten Mesophase abhängigen Temperaturbereiches die Viskosität der mesophasenhaltigen Pechschmelze reversibel zu verändern und dem Spinnvorgang anzupassen. Da zudem der Gehalt an Mesophase sich bei konstanter Temperatur nach einem anfänglichen, zunächst steilen Anstieg mit zunehmender Behandlungsdauer innerhalb eines breiten Bereiches nur noch geringfügig ändert, ist auch während der Dauer des Spinnprozesses mit keiner Veränderung der Eigenschaften des Mesophasen-Peches zu rechnen.

Erfindungsgemäß erzeugte Mesophasenpeche können beispielsweise nach den bekannten Schmelzspinnverfahren, wie z. B. dem Zieh- oder Schleuderspinnverfahren in Mesophasenfasern mit einer anisotropen Struktur umgewandelt werden.

Die thermische Weiterverarbeitung dieser Fasern zu orientierten Kohlenstofffäden kann entsprechend bekannter Verfahren und Techniken durchgeführt werden. Die erfindungsgemäß erzeugten Mesophasenpeche können außerdem das Ausgangsprodukt für andere Kohlenstoffprodukte, wie zum Beispiel Nadelkoks, bilden.

**Beispiel 1**

a) 95 Gewichtsteile eines Steinkohlenteerpeches mit einem chinolinlöslichen Anteil von 92 %, einem toluollöslichen Anteil von 51 % und einem n-hexanlöslichen Anteil von 22 % werden auf eine Feinheit kleiner 0,1 mm aufbereitet und mit 5 Gewichtsteilen "Celite" als Filterhilfsmittel innig vermischt. In einer Druckfiltrationsapparatur wird dieses Gemisch auf 290°C erhitzt und nach dem vollständigen Aufschmelzen mit einem durch Stickstoffgas erzeugten Druck durch eine Sintermetallplatte (max. Porendurchmesser 3,5 μm) gepreßt. Die Löslichkeit dieses Filtrates in organischen Lösungsmitteln entspricht der theoretisch zu erwartenden Zusammensetzung, wenn man berücksichtigt, daß durch die Filtration allein die chinolinunlöslichen Bestandteile quantitativ abgetrennt werden.

Folgende Löslichkeiten werden erhalten:

99,9 % chinolinlöslich  
55 % toluollöslich  
24 % n-hexanlöslich

b) 300 g dieses Filtrates werden mit 1.500 ml Toluol 3 Stunden bei 80°C extrahiert. Nach Abtrennung der Flüssigphase sowie Vakuumtrocknung bei 100°C verbleiben 165 g der mesophasenbildenden Fraktion, für die folgende Löslichkeiten gemessen werden:

99,5 % chinolinlöslich  
23,7 % toluollöslich  
12,1 % n-hexanlöslich

c) Der nach der Extraktion gemäß b) verbliebene lösliche Anteil wird durch destillatives Aufarbeiten im Wasserstrahlvakuum vom verwendeten Lösungsmittel befreit und zeigt danach bei einem Schmelzpunkt von 49°C (K. S.) folgende Löslichkeiten:

99,9 % chinolinlöslich  
97,5 % toluollöslich  
44,0 % n-hexanlöslich

10 g dieser Fraktion werden zusammen mit 90 g der gemäß b) isolierten mesophasenbildenden Fraktion aufgeschmolzen. Nach einer 4,5 stündigen thermischen Behandlung bei 360°C kann ein Anteil von in Chinolin unlöslichen Komponenten von 41 % bestimmt werden. Nach einer Temperaturerhöhung auf 400° C in 24 Minuten zeigt das Pech bei einem Gehalt von 43 % an in Chinolin nicht löslichen Anteilen ein für das Verspinnen geeignetes Fließverhalten.

## Beispiel 2

Ein wie in Beispiel 1c) beschrieben hergestelltes mesophasenbildendes Pech wird bei 400°C eine Stunde thermisch behandelt. Das dadurch resultierende Mesophasenpech weist zunächst eine Chinolinunlöslichkeit von 52 % auf, die ein Extrudieren erschwert. Nach einer Temperaturerhöhung auf 425°C wird ein homogenes Pech mit einem Anteil an Chinolinunlöslichen von 58 % erhalten, das ein für das Schmelzspinnen ausreichendes Fließverhalten zeigt. Der lichtoptisch bestimmte Mesophasengehalt beträgt nahezu 100 % und kann durch die bei der Extrusion auftretenden Scherkräfte orientiert werden.

## Beispiel 3

a) Ein petrolstämmiges Pech mit nachfolgenden Löslichkeiten:

99 % chinolinlöslich  
86 % toluollöslich  
46 % n-hexanlöslich

wird zur Anreicherung der mesophasenbildenden Fraktion zwei Stunden bei 400°C in einem abgeschlossenden Rührgefäß behandelt. Nach Abkühlung kann eine Reduzierung der Toluollöslichkeit auf 75 % bestimmt werden. Der Anteil der mesophasenbildenden Fraktion beträgt somit 25 %.

b) 300 g des gemäß 3a) hergestellten Peches werden mit 2000 ml Toluol 2 Stunden bei 80°C extrahiert. Nach Abtrennung der Flüssigphase sowie Vakuumtrocknung bei 110°C verbleiben 95 g der mesophasenbildenden Fraktion mit nachfolgenden Löslichkeiten:

99,7 % chinolinlöslich  
20 % toluollöslich  
8 % n-hexanlöslich

c) Der nach der Extraktion gemäß 3b) verbliebene lösliche Anteil wird wie in Beispiel 1c) beschrieben vom Lösungsmittel befreit. Der Rückstand zeigt folgende Löslichkeiten:

99,9 % chinolinlöslich  
99 % toluollöslich  
49 % n-hexanlöslich

4 g dieser Fraktion werden mit 96 g der entsprechend 3b) gewonnenen mesophasenbildenden Fraktion aufgeschmolzen und anschließend bei 360°C 1,5 Stunden thermisch behandelt. Das resultierende Mesophasenpech weist bei einer Chinolinunlöslichkeit von 20 % einen lichtoptisch bestimmbaren Mesophasengehalt von 80 % auf und kann sofort versponnen werden.

## Beispiel 4

a ) Ein bei der Kohlehydrierung anfallendes, feststofffreies Hydrierprodukt wird mit 3 Gewichtsteilen "Celite" versetzt und in einer Druckfiltrationsapparatur bei 200°C von nicht aufschmelzbaren Anteilen befreit. Das Zurückbleibende Filtrat wird im Wasserstrahlvakuum bei 350°C destilliert. Als Destillationsrückstand verbleibt ein Pech mit einem Erweichungspunkt von 120°C und folgenden Löslichkeiten:

+0,5c3v>
99,6
%
chinolinlöslich
84
%
toluollöslich
33
%
n-hexanlöslich

b) 300 g dieses Peches werden mit 2000 ml Toluol 1 Stunde bei 80°C behandelt. Der verbleibende unlösliche Anteil zeigt folgende Löslichkeiten:

99,7   % chinolinlöslich
21     % toluollöslich
8      % n-hexanlöslich

und wird in 20 %-iger Ausbeute gewonnen.

c) Nach Entfernung des Toluols aus dem entsprechend 4b) erhaltenen Extrakt verbleibt ein Rückstand, der zu 99 % in Toluol löslich ist. 12 g dieses Rückstandes werden mit 88 g der nach 4b) erhaltenen mesophasenbildenden Fraktion vermischt und 1 Stunde bei 410°C thermisch behandelt. Das entstandene Mesophasenpech enthält 52 % an in Chinolin unlöslichen Anteilen, wobei der optisch bestimmbare Mesophasenanteil bei 100 % liegt.

Nach einer Temperaturerhöhung auf 420°C kann das Pech versponnen werden.

## Patentansprüche

1. Verfahren zur Herstellung von anisotropen Kohlenstoffasern aus einem kohlenstoffhaltigen isotropen Pech, bei dem man

a) ein isotropes Pech in einer Feinheit < 0,1 mm bei einer Temperatur im Bereich von 150°C bis 350°C von den nicht schmelzbaren Bestandteilen befreit,

b) das gereinigte Pech mit einem einkernigen, organischen Lösungsmittel in einer Menge von 4 - 6 Gew.-Teilen Lösungsmittel auf 1 Gew.-Teil Pechfiltrat bei einer Temperatur im Bereich von 70 bis 90°C extrahiert,

c) den Extraktionsrückstand (mesophasenbildende Pechfraktion) vor der thermischen Umwandlung zum Mesophasenpech trocknet und 1 bis 5 Stunden bei einer Temperatur zwischen 340 und 410°C thermisch behandelt und das erhaltene anisotrope Mesophasenpech zu Fasern verspinnt, <u>dadurch gekennzeichnet,</u> daß man

d) den Extraktionsrückstand vor der thermischen Umwandlung der Stufe c) mit 1 - 15 Gew.-% des im Wasserstrahlvakuum bei 110°C vom Lösungsmittel befreiten Lösungsmittelextraktes vermischt.

2. Verfahren nach Anspruch 1, <u>dadurch gekennzeichnet,</u> daß man die anisotropen Mesophasenpeche aus den Stufen c) und/oder d) im Anschluß an eine 1- bis 5-stündige thermische Behandlung bei einer Temperatur im Bereich von 340 bis 410°C für kurze Zeit auf eine um 30 bis 50°C höhere Temperatur erhitzt und darauf sofort zu Fasern verspinnt.

3. Verfahren nach Anspruch 1 und 2, <u>dadurch gekennzeichnet,</u> daß man als isotropes Pech rohes Steinkohlenteerpech verwendet.

4. Verfahren nach Anspruch 1 bis 3, <u>dadurch gekennzeichnet,</u> daß man als organisches Lösungsmittel ein einkerniges aromatisches Lösungsmittel verwendet.

5. Verfahren nach Anspruch 4, <u>dadurch gekennzeichnet,</u> daß man Toluol als Lösungsmittel verwendet.

## Claims

1. A method of producing an isotropic carbon fibres from a carbon-containing isotropic pitch, in which

a) an isotropic pitch in a fineness of < 0.1 mm at a temperature in the range of from 150°C to 350°C is liberated from the non-fusible constituents,

b) the purified pitch is extracted with a uninuclear organic solvent in a quantity of from 4 to 6 parts by weight of solvent to 1 pert by weight of pitch filtrate at a temperature in the range of from 70 to 90°C,

c) the extraction residue (mesophase-forming pitch fraction) is dried before the thermal conversion to form the mesophase pitch and is treated thermally for 1 to 5 hours at a temperature of between 340 and 410°C and the an isotropic mesophase pitch obtained is spun to form fibres, characterized in that

d) the extraction residue is mixed before the thermal conversion of stage c) with from 1 to 15 % by weight of the solvent extract liberated from the solvent in a water-Jet vacuum at 110°C.

2. A method according to claim 1, characterized in that subsequent to a 1- to 5-hour thermal treatment at a temperature in the range of from 340 to 410°C the anisotropic mesophase pitch of stages c) and/or d) is heated for a short time to a temperature higher by 30 to 50°C and is then immediately spun to form fibres.

3. A method according to Claims 1 and 2, characterized in that crude coal tar pitch is used as the isotropic pitch.

4. A method according to Claim 1 to 3, characterized in that a uninuclear aromatic solvent is used as the organic solvent.

5. A method according to claim 4, characterized in that toluene is used as the solvent.

## Revendications

1. Procédé de fabrication de fibres de carbone à partir d'un brai isotrope contenant du carbone, conformément auquel:

a) on débarrasse un brai isotrope d'une finesse inférieure à 0,1 mm, à une température variant dans la plage de 150°C à 350°C, des constituants infusibles,

b) on extrait le brai purifié à l'aide d'un solvant organique mononucléaire, en une proportion de 4 à 6 parties en poids de solvant pour une partie en poids de filtrat de brai, à une température qui varie dans la plage de 70 à 90°C,

c) on sèche le résidu de l'extraction (fraction de brai formatrice de mésophase) avant le traitement thermique en brai mésophasique, on le soumet ensuite à un traitement thermique à une température variant de 340 à 410°C pendant une période qui fluctue de 1 à 5 heures et on file le brai à mésophase anisotrope ainsi obtenu en fibres ou filaments, caractérisé en ce que

d) avant de procéder au traitement thermique, on mélange le résidu de l'extraction du stade c) à 1 à 15 % en poids de l'extrait au solvant débarrassé du solvant à 110°C sous le vide de la trompe à eau.

2. Procédé suivant la revendication 1, caractérisé en ce que l'on chauffe les brais mésophasiques anisotropes provenant des stades c) et/ou d), consécutivement à un traitement thermique opéré à une température qui fluctue de 340 à 410°C pendant une période de 1 à 5 heures, brièvement jusqu'à une température de 30 à 50°C supérieure et on procède ensuite immédiatement à leur filage en fibres ou filaments.

3. Procédé suivant les revendications 1 et 2, caractérisé en ce que l'on utilise un brai de goudron de houille brut à titre de brai isotrope.

4. Procédé suivant les revendications 1 à 3, caractérisé en ce que l'on utilise un solvant aromatique mononucléaire à titre de solvant organique.

5. Procédé suivant la revendication 4, caractérisé en ce que l'on utilise le toluène à titre de solvant.